# EUROPEAN PATENT SPECIFICATION

(11) **EP 0 309 585 B1**
(45) Date of publication and mention of the grant of the patent: **01.02.1995**
(21) Application number: 88902544.1
(22) Date of filing: 11.03.1988
(51) Int. Cl.: B29C 45/26, B29C 45/32

(54) **HOT RUNNER SYSTEM**
SYSTEM HEISSER LEITUNGEN
SYSTEME DE BUSES DE CANAUX CHAUFFES

(30) Priority: 11.03.1987 JP 55990/87
(43) Date of publication of application: 05.04.1989
(73) Proprietor: NISSEI ASB MACHINE CO., LTD., Hanishina-gun Nagano-ken (JP)
(72) Inventor: NAKAMURA, Yoshinori Nissei ASB Machine Co., Ltd., Nagano-ken 389-06 (JP)
(74) Representative: Schrimpf, Robert
(86) International application number: JP8800259
(87) International publication number: WO8806964

(56) References cited:
- EP-A- 0 161 189
- JP-A- 6 015 113
- JP-U-54 148 667

## Description

This invention relates to a hot runner device used in the case where a number of synthetic resin molded articles are simultaneously injection molded.

Publication US-A-4 395 222 discloses a hot runner device comprising a hot runner block having a core inserting hole lengthwise extended through an internal central portion thereof, a sprue in the central portion on a side thereof, said sprue having a sprue member mounted thereon, a number of passages formed in said block from another side of said block up to said core inserting hole, each passage having a nozzle member mounted thereon, each nozzle member having only one resin passage, said passages communicating with said sprue by hot runners formed in the outer peripheral surface of a cylindrical core member having a heating means in the center portion thereof and being closely fitted lengthwise in said core inserting hole.

In the above-described hot runner device, all the hot runners are uniformly heated from the center portion of the core member.

In the hot runner device as described above, since the hot runners are provided in the outer peripheral surface of the core member, their machining may be easily accomplished as compared with the case where the hot runners are bored in the center portion of the hot runner block.

Further, since the length of the hot runner can be adjusted making use of the outer peripheral surface of the core member, the difference in length of the hot runners to the plurality of the nozzle portions differently positioned can be minimized to approximate the molding conditions.

Moreover, since the heating can be made from the center portion, the heat efficiency is excellent and the core member can be closely engaged making use of thermal expansion. No leak of resin from the hot runners occurs, and the core member can be removed after being cooled to clean the hot runners, thus saving labor in maintenance and management.

The invention aims at providing at least the same advantages in the case where nozzles are multi-nozzles each having three-resin passages.

This is obtained, according to the invention, with the hot runner device defined in claim 1.

### BRIEF DESCRIPTION OF THE DRAWINGS

The drawings show embodiments of various hot runner devices:
FIG. 1 is a longitudinal sectional view of a half portion of a device which is not according to the invention.
FIG. 2 is a side view of the same.
FIG. 3 is a longitudinal sectional side view of nozzle portions.
FIGS. 4 and 5 are respectively explanatory views in section showing the forming state of two kinds of hot runners which are not according to the invention. FIG. 6 is a plan view of a core member shown in FIG. 5.
FIG. 7 is a front view of a 6-taking core member.
FIG. 8 is a developed view of the core member.
FIG. 9 is a partly longitudinal sectional front view of a hot runner device for a multi-layer molding which is not according to the invention.
FIG. 10 is a partly longitudinal sectional side view of a hot runner device for the multi-layer molding in accordance with the invention.

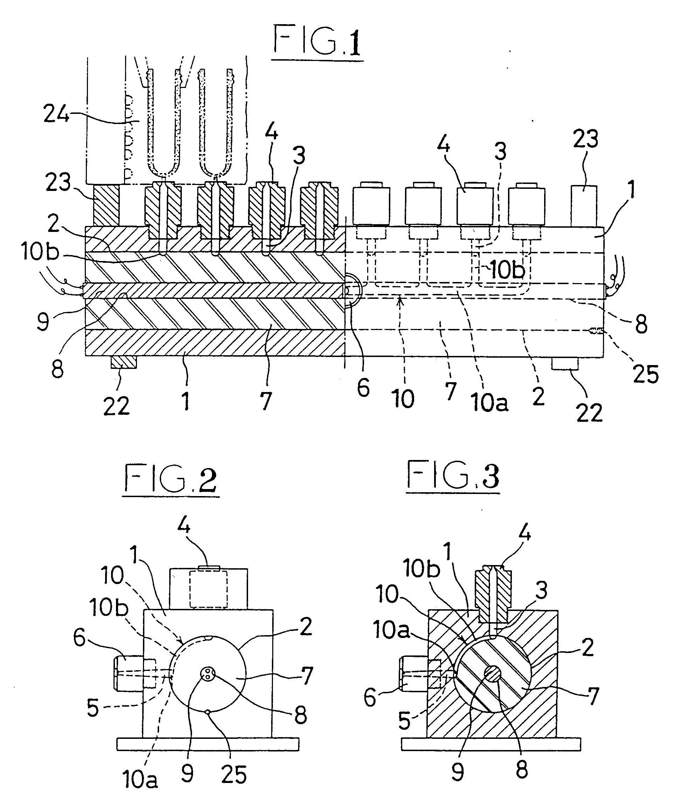

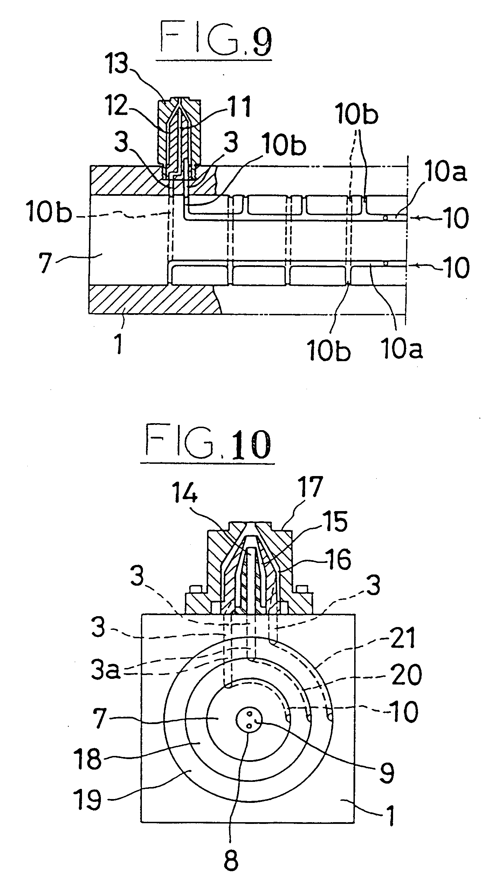

On the drawings, figures 1 to 8 relate to devices wherein nozzles have only one resin passages and figure 9 relates to a device wherein the nozzles have two resin passages. Figure 10 only relates to an embodiment according to the invention wherein the nozzles have three resin passages.

In Figures 1 to 3, reference numeral 1 designates a prismatic hot runner block having a square section, which is formed of metal ordinarily used, and having a core inserting hole 2 lengthwise internally thereof. On one side of the hot runner block 1, a required number of passages 3, 3 are extended at right angles and parallel to the core inserting hole 2 at regular intervals, and nozzle members 4, 4 are mounted on the passages 3, 3, respectively.

In the central portion on the other side of the hot runner block 1, a sprue 5 is formed at a right angle to the core inserting hole 2, and a sprue member 6 is mounted on the sprue 5. The external surface of the hot runner block is covered with a heat insulating cover, as needed.

Reference numeral 7 designates a core member formed of metal having a good heat transfer which comprises a cylindrical shape having an outside diameter closely fitted in the core inserting hole 2, and a heater 9 as a heating means is inserted into a hole 8 bored lengthwise in the center portion thereof.

A hot runner 10 is formed in the outer peripheral surface. The hot runner 10 comprises a main runner 10a connected to the sprue 5 and positioned lengthwise, and branch runners 10b, 10b connected to the passages 3, 3, respectively.

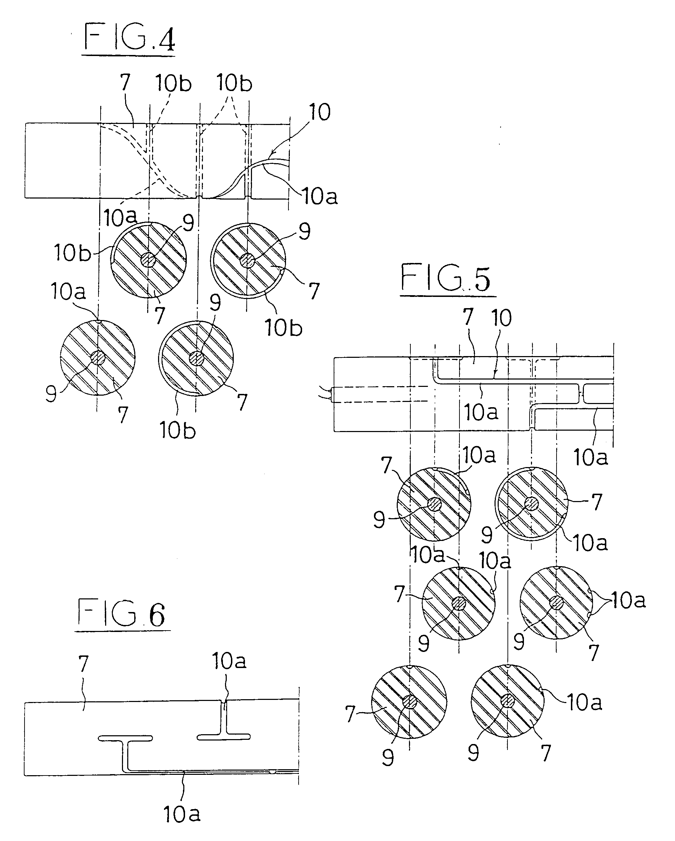

The hot runner 10 can be variously formed making use of the circumferential surface of the core member 7 as shown in FIGS. 4 to 9.

FIG. 4 shows one example in which the main runner 10a is formed along the circumferential surface of the core member 7, and a difference in length of hot runners is made as small as possible with the size (long or short) of the branch runners 10b, 10b, a section thereof longitudinally showing the core member 7 at the position of each nozzle portion.

FIG. 5 shows together with a sectional view of each nozzle portion, the case where the main runner 10a of the hot runner 10 is branched at the position of the sprue 5 into two parts, and one of the main runner 10a is lead to the opposite surface of the core member 7 so that the length of the hot runner 10 to each nozzle portion is formed to be equal to each other, and FIG. 6 is a plan view thereof.

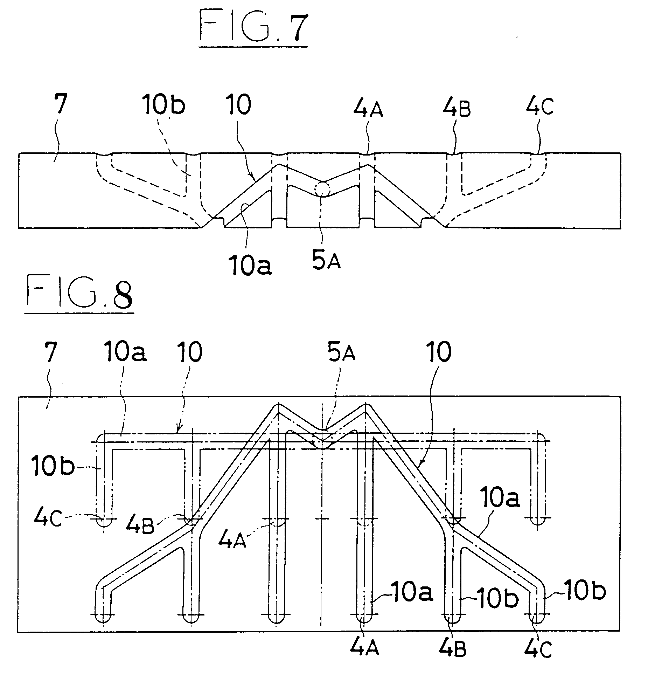

FIG. 7 shows a 6-taking core member 7, which comprises a main runner 10a formed inclined along the circumferential surface and a required number of branch runners 10b parallelly branched from the main runner 10a, and the hot runner 10 is formed into nozzle positions 4A, 4B and 4C.

In the hot runner 10 as described above, the length of the hot runner from the sprue gate position 5A to the nozzle positions 4B and 4C is shortened by the inclining formation of the main runner 10a.

FIG. 8 shows in a developed form the hot runner 10 of FIG. 7 together with a conventional hot runner (indicated at the imaginary line). Assuming that the distance from the sprue gate position 5A to the first nozzle position 4A is 1.0, the difference in distance between the second nozzle position 4B and the third nozzle position 4C is as follows:

| Conventional hot runner | | | |
|---|---|---|---|
| | 4A | 4B | 4C |
| 5A | 1.0 | 1.66 | 2.32 |
| Difference in distance | | 0.66 | 0.66 |

| Hot runner of fig.7 | | | |
|---|---|---|---|
| | 4A | 4B | 4C |
| 5A | 1.0 | 1.13 | 1.30 |
| Difference in distance | | 0.13 | 0.17 |

As will be apparent from the above, the length of the hot runner 10 to the nozzle position 4C at both ends can be shortened so as not to produce a large difference in the injection pressure, temperature and the like at each nozzle position.

FIG. 9 shows a hot runner device provided with a plurality of multi-nozzle members 13 having two independent resin passages 11 and 12 internally provided. Two hot runners 10, 10 connected to said passages 11 and 12, respectively, are formed independently from each other on one side of the core member 7, and whenever the multinozzle member 13 is positioned from the hot runners 10 and 10, the branch runners 10b, 10b are branched from the main runners 10a, 10b without being crossed, and the branch hot runners 10b, 10 are connected to the resin passages 11 and 12, respectively, through paired passages 3, 3 bored in the hot runner block 1. With this arrangement, two kinds of different molten resins can be supplied to the multi-nozzle member 13 without being fused halfway.

FIG. 10 shows a hot runner device provided according to the invention with a multi-nozzle member 17 having three resin passages 14, 15 and 16, in which the core member 7 together with a plurality of concentric cylindrical bodies 18 and 19 closed fitted externally thereof are inserted into the hot runner block 1, and the core member 7 and hot runners 10, 20 and 21 formed on the external surface of the cylindrical bodies 18 and 19 are connected to the resin passages 14, 15 and 16, respectively, through the three passages 3, 3, 3 bored in the hot runner block 1 and through-holes 3a, 3a bored in the cylindrical bodies 18, 19, respectively. In this case, sprue and sprue member are provided according to the number of hot runners, though not shown.

In the hot runner device constructed as described above, the hot runner 10 is formed on the external surface of the cylindrical core member 7, and therefore the hot runner 10 can be easily formed through the use of a conventional cutting apparatus. The device may be subjected to plating treatment to reduce a flow resistance in the hot runner, and in addition, a scratch produced during the cutting can be coated with plating.

Furthermore, since the core inserting hole 2 of the hot runner block 1 has a large diameter, an open end of the passage 3 opened to the side wall of the core inserting hole can be smoothly processed from the side of the core inserting hole to remove a flow resistance which is liable to occur in a connection with the hot runner.

Moreover, the hot runner 10 is positioned at a boundary between the core inserting hole 2 and the core member 7 but the core member 7 and the hot runner block 1 are expanded due to heating, and therefore, the core member 7 becomes closely contacted with the wall surface of the core inserting hole 2 to prevent the molten resin from being leaked from the hot runner 10. In addition, since the hot runner 10 is heated from the interior of the core member 7, an unevenness in temperature hardly occurs and a melting temperature may be uniformly maintained.

In the Figures, 22 designates a seat plate, 23 a tray for a cavity mold 24, and 25 a fixing screw.

### INDUSTRIAL AVAILABILITY

As described above, according to this invention, a hot runner 10 is formed in the external surface of a core member 7 having a heating means in its center portion, and the core member 7 is inserted into a hot runner block 1 provided with a plurality of nozzle members 4, 4 to constitute a hot runner device. Therefore, the forming of a hot runner can be easily made as compared with the case where a hot runner is made to extend through the hot runner block. In addition, the length of the hot runner can be made shorter than that of prior art to reduce a difference in length between the nozzle members, and therefore, the molding conditions in the nozzle portions are also approximated. These merits are convenient in the manufacture and molding and extremely effective in industry. The device of the invention may be widely used.

## Claims

1. A hot runner device comprising a hot runner block (1) having a core inserting hole (2) lengthwise extended through an internal central portion thereof, sprues (5) on a side of said block, each sprue having a sprue member (6) mounted thereon, multi-nozzle members (17) mounted on another side of said block, each multi-nozzle member (17) having three resin passages (14,15,16), a cylindrical core member (7) provided with a heating means (8,9) in the center portion thereof and inserted lengthwise in said hole together with two concentric cylindrical bodies (18,19) closed fitted externally thereof, and hot runners (10,20,21) formed on the external surface of said core member (7) and of said cylindrical bodies (18,19) for connecting the sprues to the resin passages (14,15,16), respectively, of each multi-nozzle member, through passages (3,3,3,) bored in the hot runner block (1) from said another side of the block up to said core inserting hole and through-holes (3a, 3a) bored in the cylindrical bodies (18,19), respectively, sprues and sprue members being provided according to the number of hot runners.

2. The hot runner device according to claim 1 wherein said hot runner block (1) is a square cylindrical body.

3. The hot runner device according to claim 1 wherein said hot runners (10,20,21) are subjected to plating treatment.

## Patentansprüche

1. Heißkanalvorrichtung mit einem Heißkanalblock (1), der ein Kerneinsatzloch (2) hat, das sich längs durch einen inneren mittleren Abschnitt des Heißkanalblocks (1) erstreckt, Eingüssen auf einer Seite des Blocks (11), wobei jeder Einguß ein am Block montiertes Eingußelement (6) hat, Vielfach-Düsenelementen (17), die auf einer anderen Seite des Blocks (11) montiert sind, wobei jedes Vielfach-Düsenelement (17) drei Harzkanäle (14, 15, 16) hat, einem zylindrischen Kernelement (7), in dessen zentralem Abschnitt eine Heizvorrichtung (8, 9) vorgesehen ist und das zusammen mit zwei konzentrischen, dicht auf das Kernelement außen aufgepaßten zylindrischen Körpern (18, 19) in das Loch (2) in Längsrichtung eingefügt ist, und Heißkanälen (10, 20, 21), welche in die äußere Oberfläche des Kernelements (7) und der zylindrischen Körper (18, 19) eingeformt sind, um die Eingüsse mit den Harzkanälen (14, 15, 16) jedes Vielfach-Düsenelementes mittels Leitungen (3, 3, 3), welche in den Heißkanalblock (1) von der anderen Seite des Blocks (1) bis zu dem Kerneinsatzloch (2) gebohrt sind, und mittels Durchgangslöchern (3a, 3a) zu verbinden, welche in die jeweiligen zylindrischen Körper (18, 19) gebohrt sind, wobei eine der Anzahl der Heißkanäle entsprechende Anzahl von Eingüssen und Eingußelementen vorgesehen sind.

2. Heißkanalvorrichtung nach Anspruch 1, bei der der Heißkanalblock (1) ein quadratischer Zylinderkörper ist.

3. Heißkanalvorrichtung nach Anspruch 1, bei der die Heißkanäle (10, 20, 21) einer Metallisierungsbehandlung unterworfen sind.

## Revendications

1. Dispositif à canaux chauffés comportant un bloc de canaux chauffés (1) possédant un trou d'insertion de noyau (2) qui s'étend dans la direction longitudinale à travers une partie centrale intérieure de ce bloc, des entrées d'injection (5) sur un côté dudit bloc et sur chacun desquels est monté un élément (6) d'entrée d'injection, des éléments (17) à buses multiples montés sur l'autre côté dudit bloc, chaque élément (17) à buses multiples comportant trois passages (14,15,16) pour la résine, un élément formant noyau cylindrique (7) comportant, dans sa partie centrale, des moyens de chauffage (8,9) insérés dans la direction longitudinale à l'intérieur dudit trou conjointement avec deux corps cylindriques concentriques (18,19) montés selon un ajustement serré à partir de l'extérieur, et des canaux
chauffés (10,20,21) formés sur la surface extérieure dudit élément formant noyau (7) et desdits corps cylindriques (18,19) pour raccorder respectivement les entrées d'injection aux passages (14,15,16) pour la résine de chacun des éléments à buses multiples, grâce à des passages (3,3,3) usinés dans le bloc (1) à canaux
chauffés, depuis ledit autre côté du bloc jusqu'audit trou d'insertion de noyau, et des trous traversants (3a,3a) percés respectivement dans les corps cylindriques (18,19), des entrées d'injection et des éléments d'entrée d'injection étant prévus en fonction du nombre de canaux de carottes chauffés.

2. Dispositif à canaux chauffés selon la revendication 1, dans lequel ledit bloc (1) à canaux
chauffés est un bloc cylindrique carré.

3. Dispositif à canaux chauffés selon la revendication 1, dans lequel lesdits canaux chauffés (10,20,21) sont soumis à un traitement de placage.
